# EUROPÄISCHE PATENTSCHRIFT

(11) **EP 0 875 357 B1**
(45) Veröffentlichungstag und Bekanntmachung des Hinweises auf die Patenterteilung: **07.11.2001**
(21) Anmeldenummer: 98101672.8
(22) Anmeldetag: 31.01.1998
(51) Int. Cl.: B29C 47/68

(54) **Filtereinrichtung für Strangpressen und Spritzgiessmaschinen**
Filter device for extruders and injection machines
Filtre pour extrudeuses et presses d'injection

(30) Priorität: 02.05.1997 DE 19718598; 17.07.1997 DE 19730574
(43) Veröffentlichungstag der Anmeldung: 04.11.1998
(73) Patentinhaber: Kreyenborg Verwaltungen und Beteiligungen GmbH & Co. KG, 48157 Münster (DE)
(72) Erfinder: Kreyenborg, Jan-Udo, 48145 Münster (DE); Stude, Rolf-Rüdiger, 48157 Münster (DE)
(74) Vertreter: Habbel, Hans-Georg, Dipl.-Ing.

(56) Entgegenhaltungen:
- US-A- 3 503 096
- US-A- 4 096 069

## Beschreibung

Die Erfindung bezieht sich auf eine Filtereinrichtung gemäß dem Oberbegriff des Anspruchs 1.

Eine gattungsbildende Filtereinrichtung wird in der DE 42 18 756 C1 beschrieben und schafft die Möglichkeit, mit den bisher in großem Umfang eingesetzten Filtereinrichtungen ein Rückspülen durchzuführen, ohne daß die Anschaffung neuer Filtereinrichtungen notwendig ist.

Mit anderen Worten ausgedrückt heißt das, es wird ein Zusatzgerät geschaffen, das an bestehende Filtereinrichtungen ansetzbar ist, um somit bei bestehenden Einrichtungen die Standzeiten der Siebe zu erhöhen.

Der vorliegenden Erfindung liegt die Aufgabe zugrunde, eine möglichst einfach aufgebaute Zusatzeinrichtung vorzuschlagen, die an bestehende Filtereinrichtungen anschließbar ist und die ein problemloses Rückspülen ermöglicht.

Diese der Erfindung zugrundeliegende Aufgabe wird durch die Lehre des Anspruchs 1 gelöst.

Vorteilhafte Ausgestaltungen sind in den abhängigen Ansprüchen erläutert.

Mit anderen Worten ausgedrückt wird ein Zusatzgehäuse vorgeschlagen, das einen quer zur Strömungsrichtung des Kunststoffstromes bewegbares Sperrmittel aufweist, wobei dieses Zusatzgehäuse zwischen dem Eintrittshauptkanal und die Eintrittsteilkanäle im eigentlichen Filtergehäuse eingeschaltet wird. Das Sperrmittel ist vorzugsweise als Bolzen ausgebildet und der Bolzen in diesem Vorsatzgehäuse weist eine Durchflußöffnung für den plastifizierten Kunststoffstrom auf, wobei gemäß einem wesentlichen Merkmal der Erfindung diese Durchflußöffnung dadurch gebildet wird, daß der Bolzen eine vorzugsweise umlaufende Einschnürung aufweist, die von dem Kunststoffstrom durchströmt werden kann. Diese Einschnürung mündet an der Mündung der beiden Eintrittsteilkanäle. Der Bolzen ist quer zum Kunststoffstrom verschiebbar und weist zusätzlich einen Abführhauptkanal und Abführteilkanäle auf, die an den Abführhauptkanal anschließen. Durch Verschieben des Bolzens kann nunmehr eine Stellung erreicht werden, in der der Eintrittshauptkanal über die im Bolzen vorgesehene Einschnürung mit einem Eintrittsteilkanal verbunden ist, während der andere Eintrittsteilkanal über einen Abführteilkanal mit dem Abführhauptkanal verbunden ist, so daß also das Beschicken des an die Filtereinrichtung anschließenden Werkzeuges weiterhin erfolgt, gleichzeitig aber das stillgesetzte Sieb von der Reinsiebseite zur Schmutzsiebseite hin durchströmt wird und die hier abgelösten Schmutzpartikelchen über den diesem Sieb zugeordneten Eintrittsteilkanal zurückgespült und sodann über einen Abführteilkanal in den Abführhauptkanal geführt werden. Der Abführhauptkanal mündet hierbei in die Atmosphäre.

Das Zusatzgehäuse ist beheizt und ermöglicht dadurch ein problemloses Abfließen des plastifizierten Kunststoffmaterials.

Die Sperrstellungen des als Bolzen ausgebildeten Sperrmittels sind derart, daß dann, wenn ein Abführteilkanal mit einem Eintrittsteilkanal des eigentlichen Filtergehäuses verbunden ist, der Fließquerschnitt im Übergangsbereich zwischen Eintrittsteilkanal und Abführteilkanal verringert ist, so daß ein ausreichender Druckaufbau in dem zur Produktion bestimmten Sieb erreicht wird und dadurch das Beschicken des an das Filtergehäuse anschließenden Werkzeuges sichergestellt ist

In der Praxis sind sogenannte Anfahrventile bekanntgeworden, die dazu dienen, den plastifizierten Kunststoff während der Startphase aus dem Extruder heraus umzulenken, bevor er in einen Siebwechsler oder in einen Düsenkopf eintritt. Aufgabe derartiger sogenannter Anfahrventile ist das Reinhalten der Gesamtanlage während des Arbeitsbeginns des Extruders. Weiterhin können solche Anfahrventile auch zur Abfuhr von überflüssigem Material zur Vermeidung einer Verstopfung des Düsenkopfes eingesetzt werden und sie können zur Vermeidung unnötiger Verschmutzungen der Siebe besonders verschmutztes Material vor dem Siebwechsler umlenken.

Der vorliegenden Erfindung liegt weiterhin die Aufgabe zugrunde, die Zusatzeinrichtung so weiter auszubilden, daß sie gleichzeitig auch als Anfahrventil benutzt werden kann.

Hierzu wird vorgeschlagen, daß der Bolzen an seiner dem Eintrittshauptkanal zugewandten Seite einen Bypasskanal aufweist, der in Abhängigkeit der Stellung des Bolzens eine Verbindung zwischen dem Eintrittshauptkanal und der Außenatmosphäre herzustellen in der Lage ist.

In besonderer Ausgestaltung dieses Vorschlages wird dann weiterhin vorgeschlagen, daß die Mündung des Bypasskanales in den Eintrittshauptkanal derart angeordnet ist, daß der Eintrittshauptkanal sowohl mit der Einschnürung als auch mit dem Bypasskanal in Fließverbindung bringbar ist, aber durch Verstellen des Bolzens die Verbindung zwischen dem Eintrittshauptkanal und der Einschnürung abschließbar ist, während die Verbindung zwischen Eintrittshauptkanal und Bypasskanal geöffnet ist. Hierdurch wird also ein langsamer Übergang aus der eigentlichen Anfahrposition in die Produktionsstellung des Bolzens möglich.

Schließlich schlägt die Erfindung vor, daß der eigentliche Bolzen des Sperrmittels gedreht werden kann und in seiner Längsachse verschoben werden kann, so daß ein Auswechseln der Siebe auch dann möglich ist, wenn eine große Siebfläche und eine kleine Dichtfläche zwischen Siebbolzen und Gehäuse vorgesehen ist.

Für spezielle Siebflächen kann auch vorgesehen sein, daß auf beiden Seiten des eigentlichen, die Siebbolzen aufnehmenden Gehäuses Zusatzgehäuse vorgesehen sind, die ein entsprechendes Absperren der Zu- und der Abfuhrleitung aus dem Siebbolzengehäuse ermöglichen.

Ein Ausführungsbeispiel der Erfindung wird nachfolgend anhand der Zeichnungen erläutert. Die Zeichnungen zeigen dabei in
- Fig. 1: eine erfindungsgemäße Anordnung in der Produktionsstellung, d. h. ein Filtergehäuse mit vorgesetztem Rückspülgehäuse, in
- Fig. 2: einen Schnitt durch den im Vorsatzgehäuse angeordneten Bolzen zur Verdeutlichung der Einschnürung, in
- Fig. 3: einen Schnitt durch ein Vorsatzgehäuse mit Sperrmitteln in der sogenannten Rückspülstellung für das eine Sieb, in
- Fig. 4: das Vorsatzgehäuse mit dem Sperrmittel in einer Stellung, in der das Rückspülen des anderen Siebes erfolgt, in
- Fig. 5: eine ergänzte Ausführungsform des eigentlichen Bolzens in der sogenannten Anfahrposition, in
- Fig. 6: den Bolzen in einer Übergangsstellung aus der Anfahrposition in die Produktionsposition, in den
- Fig. 7, 8 und 9: die Anordnung gemäß den Fig. 5 und 6, aber in einer Stellung, die das Drehen und damit das Absperren verdeutlichen soll und in
- Fig. 10: eine Anordnung, bei der beiderseits des die Siebbolzen aufnehmenden Gehäuses Absperrbolzen angeordnet sind.

Bei der dargestellten Ausführungsform ist ein Gehäuse 1 vorgesehen, das einen Eintrittshauptkanal 6 und einen Austrittshauptkanal 7 aufweist, wobei vor dem Eintrittshauptkanal 6 eine in der Zeichnung nicht dargestellte Schnecke vorgesehen sein kann, durch welche das plastifizierte Kunststoffmaterial dem Eintrittshauptkanal 6 unter dem entsprechend hohen Druck zugeführt wird.

Innerhalb des Gehäuses 1 teilt sich der Eintrittshauptkanal 6 in zwei Eintrittsteilkanäle 8a und 8b. Weiterhin sind innerhalb des Gehäuses 1 quer zur Ausrichtung der Eintrittsteilkanäle 8a und 8b verschiebbare, als Siebträgerelemente ausgebildete Siebbolzen 2 und 3 angeordnet, in denen als Filterelemente ausgebildete Siebräume vorgesehen sind, in denen Siebe 4, 5 vorgesehen werden, so daß in den Siebräumen eine Schmutzsiebseite S und eine Reinsiebseite R gebildet wird. An die Reinsiebseite R der Siebbolzen 2 und 3 schließen die Austrittsteilkanäle 9a und 9b an, die zu einem Austrittshauptkanal 7 führen.

Vor dem eigentlichen Gehäuse 1 der Filtereinrichtung ist ein Zusatzgehäuse vorgesehen, das als Gehäuse 17 nachfolgend bezeichnet wird. Dieses Gehäuse 17 weist einen als Sperrmittel ausgebildeten Bolzen 11 auf, der über hydraulische, pneumatische oder sonstige Mittel quer zur Strömungsrichtung des Kunststoffstromes verschiebbar ist. In das Gehäuse 17 münden Verlängerungen der Eintrittsteilkanäle 8a und 8b auf der einen Seite und gegenüberliegend auf der anderen Seite des Bolzens 11 mündet der Haupteintrittskanal 6.

Die Fließverbindung zwischen dem Eintrittshauptkanal 6 und den Eintrittsteilkanälen 8a und 8b wird durch eine Einschnürung 12 im Bolzen 11 erreicht, wobei bei dem dargestellten Ausführungsbeispiel der Bolzen 11 zylindrisch ausgebildet ist, d. h. im Querschnitt rund und die Einschnürung 12 über den ganzen Außenumfang des Bolzens 11 vorgesehen wird. Das durch das Gehäuse 17 und den Bolzen 11 den Eintrittshauptkanal 6 gebildete Gerät wird nachfolgend als Sperrmittel 10 bezeichnet, wobei der Bolzen 11 auch polygonal ausgebildet sein kann.

Der Bolzen 11 weist weiterhin einen Abführhauptkanal 16 auf, der sich bei dem dargestellten Ausführungsbeispiel zentrisch in Längsachse des Bolzens 11 gesehen erstreckt und einenendes zur Atmosphäre hin frei mündet. Zwei Abführteilkanäle 14 und 15 erstrecken sich quer zur Längsachse des Abführhauptkanales 16 und münden einenendes in den Abführhauptkanal 16 und anderenendes an der Außenseite des Bolzens 11. Natürlich können auch andere Ausgestaltungen des oder der Abführkanäle vorgesehen sein.

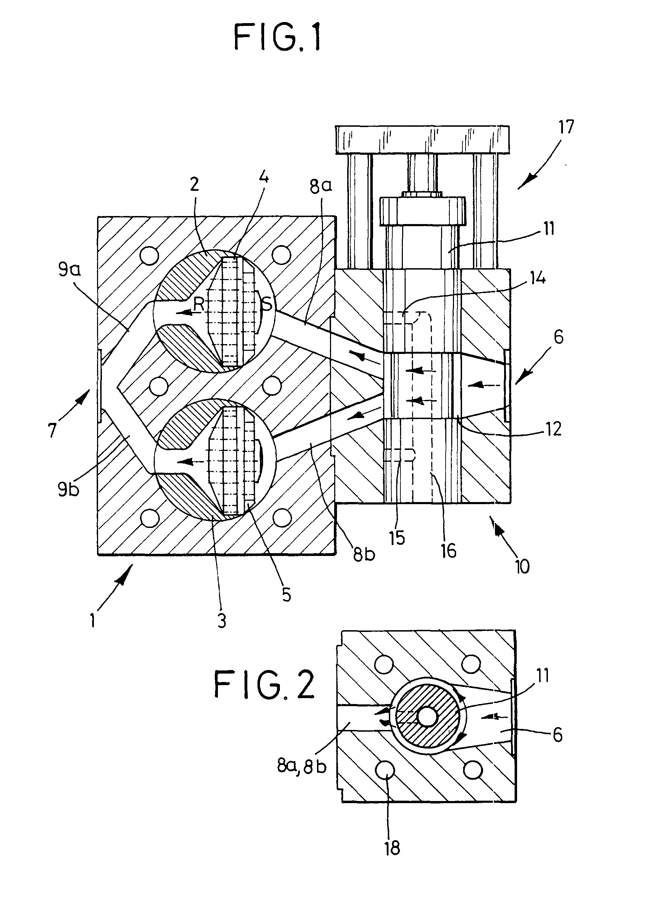

Aus der Schnittdarstellung in Fig. 2 ist zu ersehen, daß in dem Gehäuse 17 Heizpatronen 18 angeordnet sind, die also auch für eine ausreichende Temperatur des Bolzens 11 und damit eine ausreichende Temperatur im Hauptabführkanal 16 sorgen.

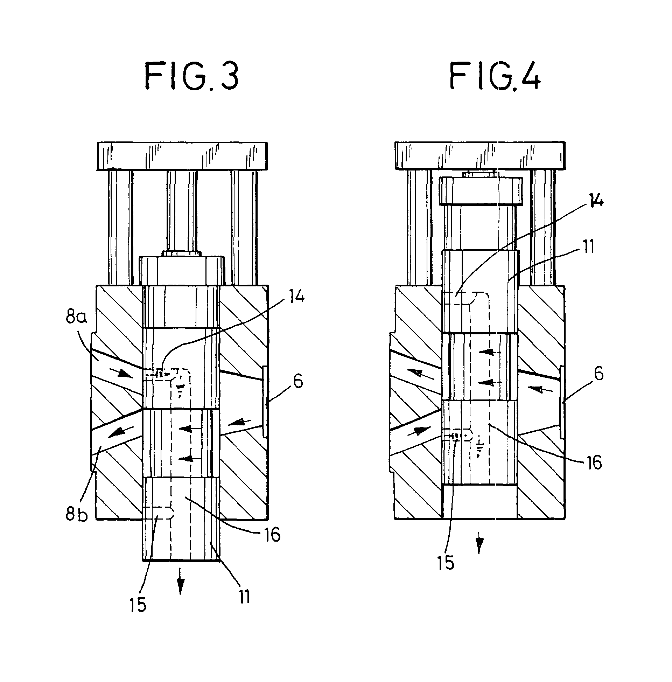

Die Fig. 3 und 4 zeigen die Arbeitsweise der erfindungsgemäßen Einrichtung.

Durch Verschieben des Bolzens 11 in die in Fig. 3 dargestellte Stellung wird die Einschnürung 12 nur noch teilweise mit dem Eintrittsteilkanal 8b in Verbindung gebracht, andererseits aber der Abführteilkanal 14 in Fließverbindung mit dem Eintrittsteilkanal 8a gebracht. Hierdurch wird erreicht, daß das durch den Eintrittsteilkanal 8b strömende Kunststoffmaterial auch auf die Reinseite R des Siebes 4 geführt wird, dann das Sieb 4 durchströmt und zur Schmutzsiebseite S gelangt, dann entgegen der an sich normalen Fließrichtung im Eintrittsteilkanal 8a zurückfließt und über den Abführteilkanal 14 zum Abführhauptkanal 16 gelangt. Auf diese Weise werden die auf der Schmutzsiebseite S gelagerten abfiltrierten Partikelchen nach außen abgeführt.

Bei der Darstellung gemäß Fig. 4 ist der Bolzen 11 in die andere Richtung verschoben, d. h. die Einschnürung 12 steht nunmehr in Fließverbindung mit dem Eintrittsteilkanal 8a und der Eintrittsteilkanal 8b wirkt nunmehr als Rückspülkanal und steht mit dem Abführteilkanal 15 in Fließverbindung und dieser wiederum mit dem Abführhauptkanal 16, der das Material zur Außenatmosphäre abführt.

Die Fig. 3 und 4 machen deutlich, daß der Eintrittshauptkanal 6 mit seinem vollen Arbeitsquerschnitt über die Einschnürung 12 mit dem jeweiligen Eintrittsteilkanal 8a oder 8b in Verbindung steht, der das Material zur Schmutzsiebseite des Siebes 4 oder 5 führt. Die Verbindung zwischen dem Abführteilkanal 14 bzw. 15 mit dem in der jeweiligen Rückspülstellung mit diesem verbundenen Eintrittsteilkanal 8a oder 8b weist aber einen kleineren Fließquerschnitt auf, so daß ein hoher Druckaufbau innerhalb des eigentlichen Filtergehäuses beibehalten wird, d. h. auf der Reinsiebseite, insbesondere des in Produktionsstellung befindlichen Siebes, ist der Druck ausreichend hoch, um die nachgeschaltete Arbeitsmaschine oder das nachgeschaltete Werkzeug zu beschicken.

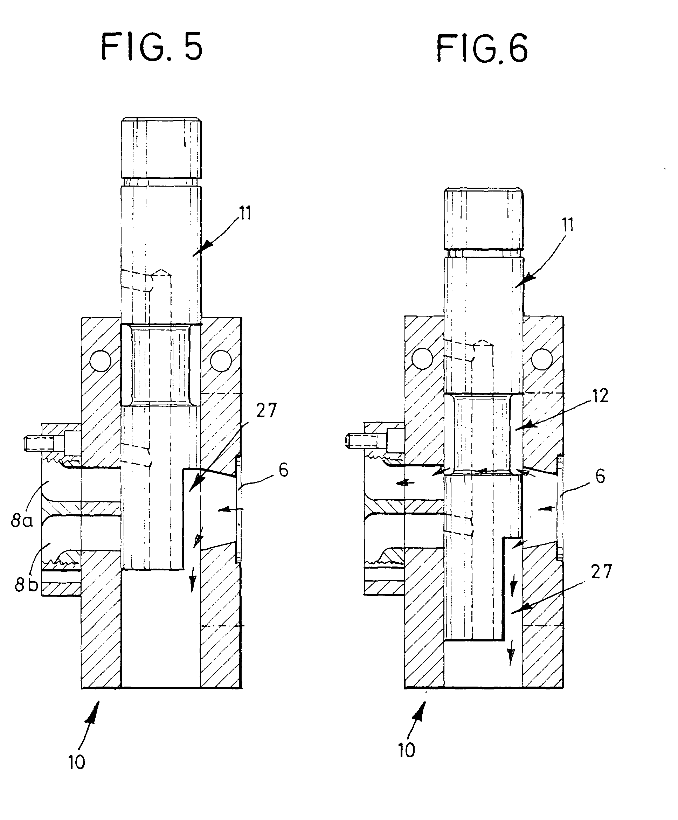

Die Fig. 5 und 6 zeigen die ergänzte Ausführungsform des Bolzens 11, wodurch die anhand der Fig. 1 bis 4 vorbeschriebene Anordnung auch als Anfahrventil nutzbar wird.

In den Fig. 5 und 6 sind die gleichen Bauteile gemäß den Fig. 1 bis 4 mit den gleichen Bezugszeichen versehen.

Zusätzlich ist der Bolzen 11 mit einem Bypasskanal 27 ausgerüstet, der so angeordnet ist, daß er in Fließverbindung mit dem Eintrittshauptkanal 6 bringbar ist, so daß das aus dem Eintrittshauptkanal 6 kommende Material nicht zu den Eintrittskanälen 8a oder 8b geführt wird, sondern zur Atmosphäre hin abgeführt wird. Beim Start des Extruders wird verunreinigte und verkräckte Schmelze ungefiltert durch den Bypasskanal 27 nach außen abgelassen und erst bei stabilem Prozeß wird die Produktion gestartet, indem gemäß Fig. 6 der Bolzen 11 in eine Zwischenposition verschoben wird, in der sowohl der Bypasskanal 27 mit dem Eintrittshauptkanal 6 in Verbindung steht wie auch die Einschnürung 12, so daß nunmehr Material über den Eintrittshauptkanal 6 durch die Einschnürung 12 zum Eintrittsteilkanal 8a geführt werden kann, gleichzeitig aber auch weiterhin Material über den Bypasskanal 27 abgeführt wird.

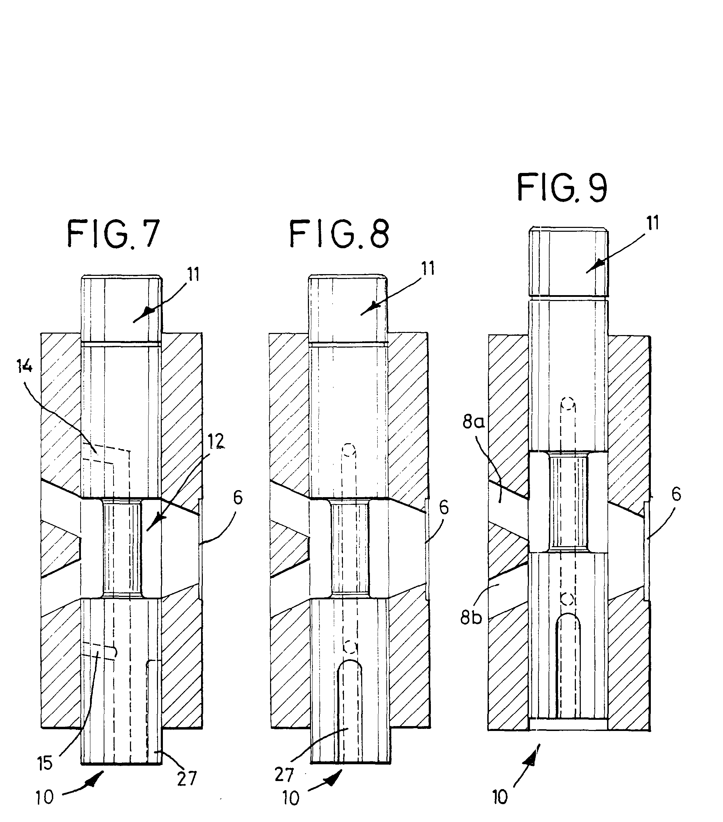

Die Fig. 7 bis 9 verdeutlichen, daß auch die Möglichkeit gegeben ist, den Bolzen 11 zu drehen, so daß dadurch einmal gemäß Fig. 7 die Produktionsstellung wie in Fig. 1 gegeben ist, zum anderen aber nunmehr durch eine 90°-Drehung erreicht werden kann, daß - wie in Fig. 8 dargestellt - die Mündungen der Abführteilkanäle 14 und 15 verschlossen sind, so daß bei keiner Stellung des Bolzens ein Rückspülen möglich ist.

Fig. 9 soll verdeutlichen, daß in dieser gedrehten Stellung ein vertikales Verschieben des Bolzens 11 möglich ist, so daß beispielsweise die Verbindung vom Haupteintrittskanal 6 über den Eintrittsteilkanal 8a zum in Fig. 9 nicht dargestellten Sieb möglich ist, aber die Verbindung zwischen Haupteintrittskanal 6 zu dem Eintrittsteilkanal 8b gesperrt ist.

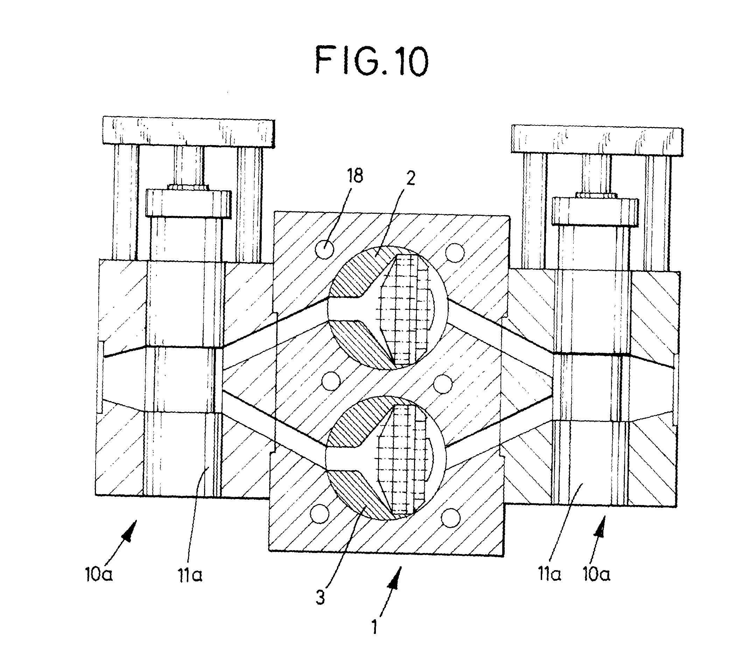

Die Darstellung in Fig. 10 zeigt, daß es möglich ist, ein einfach ausgebildetes Sperrmittel 10a mit vertikal beweglichen Bolzen 11a beiderseits des Gehäuses 1 anzuordnen, so daß damit die im Gehäuse 1 angeordneten Siebbolzen 2 und 3 nach beiden Seiten hin absperrbar sind.
¹ Translator's note: "backing-up" in the sense of retarding a flow of material and backing it up in that way.

## Patentansprüche

1. Filtereinrichtung für Strangpressen und Spritzgießmaschinen zur Verarbeitung von thermoplastischen Kunststoffen, mit in mindestens zwei getrennten Teilkanälen eines Gehäuses (1) zwischen mindestens einem Eintrittshauptkanal (6) und mindestens einem Austrittshauptkanal (7) auswechselbar in Siebträgerelementen (2, 3) angeordneten Filterelementen (4, 5), die mit den in der jeweiligen Gehäusebohrung angeordneten Siebträgerelementen (2, 3) ein- und ausfahrbar sind, wobei im Bereich des Eintrittshauptkanals (6) vor den Siebträgerelementen (2, 3) mindestens ein Sperrmittel (10) angeordnet ist, das in der Durchflußstellung den Kunststoffstrom vom Eintrittshauptkanal (6) zu den beiden Filterelementen (4, 5) nicht behindert, aber in einer Sperrstellung den Durchfluß des Kunststoffes in einem Eintrittsteilkanal (8a oder 8b) vom Eintrittshauptkanal (6) trennt und die Schmutzsiebseite (S) des diesem Eintrittsteilkanal (8a oder 8b) zugeordneten Filterelementes (4 oder 5) mit der Gehäuseaußenseite über Abführkanäle verbindet, **dadurch gekennzeichnet, daß**
a) das Sperrmittel (10) durch einen den Eintrittshauptkanal (6) durchquerenden, quer zur Strömungsrichtung des zu filtrierenden Kunststoffstromes verstellbaren Bolzen (11) gebildet ist,
b) der Strömungsweg vom Eintrittshauptkanal (6) zu den Eintrittsteilkanälen (8a und 8b) durch eine Einschnürung (12) im Außenumfang des Bolzens (11) gebildet wird.

2. Filtereinrichtung nach Anspruch 1, **dadurch gekennzeichnet, daß** die Abführkanäle im Bolzen (11) angeordnet sind.

3. Filtereinrichtung nach Anspruch 1, **gekennzeichnet durch** separate Auslaßöffnungen, wie Nuten, Kanäle, Stauräume oder By-passleitungen.

4. Filtereinrichtung nach Anspruch 1 und 2, **gekennzeichnet durch** einen Abführhauptkanal (16) im Bolzen (11), der einenendes zur Atmosphäre mündet und an den zwei Abführteilkanäle (14, 15) anschließen, die bei Verschieben des Bolzens (11) mit dem einen oder anderen Eintrittsteilkanal (8a, 8b) in Fließverbindung bringbar sind.

5. Filtereinrichtung nach einem der vorhergehenden Ansprüche, **dadurch gekennzeichnet, daß** bei Fließverbindung des Abführteilkanales (14, 15) mit den zugeordneten Eintrittsteilkanälen (8a, 8b) der Fließquerschnitt im Übergangsbereich zwischen den Eintrittsteilkanälen (8a, 8b) und den Abführteilkanälen (14, 15) kleiner ist als der Fließquerschnitt der Eintrittsteilkanäle (8a, 8b).

6. Filtereinrichtung nach einem der vorhergehenden Ansprüche, **dadurch gekennzeichnet, daß** das Sperrmittel (10) in einem eigenen Gehäuse (17) angeordnet ist, das an das Gehäuse (1) der Filtereinrichtung anschließbar ist.

7. Filtereinrichtung nach Anspruch 6, **dadurch gekennzeichnet, daß** das Gehäuse (17) beheizbar ist.

8. Filtereinrichtung nach Anspruch 1, **dadurch gekennzeichnet, daß** der Bolzen (11) im Schnitt rund ausgebildet ist und die Einschnürung (12) über den ganzen Umfang des Bolzens (11) vorgesehen ist.

9. Filtereinrichtung nach Anspruch 1, **dadurch gekennzeichnet, daß** der Bolzen (11) an seiner dem Eintrittshauptkanal (6) zugewandten Seite einen Bypasskanal (27) aufweist, der in Abhängigkeit der Stellung des Bolzens (11) eine Verbindung zwischen dem Eintrittshauptkanal (6) und der Außenatmosphäre herzustellen in der Lage ist.

10. Filtereinrichtung nach Anspruch 9, **dadurch gekennzeichnet, daß** die Mündung des Bypasskanales (27) in den Eintrittshauptkanal (6) derart angeordnet ist, daß der Eintrittshauptkanal (6) sowohl mit der Einschnürung (12) als auch mit dem Bypass (27) in Fließverbindung bringbar ist, aber durch Verstellen des Bolzens (11) die Verbindung zwischen Eintrittshauptkanal (6) und der Einschnürung (12) abschließbar ist, während die Verbindung zwischen dem Eintrittshauptkanal (6) und dem Bypasskanal (27) geöffnet ist.

11. Filtereinrichtung nach Anspruch 1, **dadurch gekennzeichnet, daß** der Bolzen (11) des Sperrmittels (10) zusätzlich zu seiner Bewegung in Längsachse auch um die Längsachse drehbar ist.

12. Filtereinrichtung nach einem der vorhergehenden Ansprüche, **dadurch gekennzeichnet, daß** beiderseits des Gehäuses (1) Sperrmittel (10a) bei der Eintrittsöffnung und hinter der Austrittsöffnung angeordnet sind.

## Claims

1. Filter device for extruders and injection machines for processing thermoplastic plastics materials, having filter elements (4, 5) arranged in at least two separate part-passages in a housing (1), which filter elements are replaceably arranged in filter-carrying members (2, 3) between at least one main inlet passage (6) and at least one main outlet passage (7) and can be inserted and withdrawn with the filter-carrying members (2, 3) arranged in respective bores in the housing, there being arranged in the region of the main inlet passage (6), upstream of the filter-carrying members (2,3), at least one blocking means (10) which, in the throughflow position, does not present an obstacle to the flow of plastics material from the main inlet passage (6) to the two filter elements (4, 5) but, in a blocking position, cuts off the throughflow of plastics material in one part inlet passage (8a or 8b) from the main inlet passage (6) and connects the fouled side (S) of the filter element (4 or 5) assigned to this part inlet passage (8a or 8b) to the outside of the housing via discharge passages, **characterised in that**
a) the blocking means (10) is formed by a pin (11) which passes through the main inlet passage (6) and which is adjustable transversely to the direction of flow of the stream of plastics material to be filtered,
b) the flow path from the main inlet passage (6) to the part inlet passages (8a and 8b) is formed by a constriction (12) in the outer circumference of the pin (11).

2. Filter device according to claim 1, **characterised in that** the discharge passages are arranged in the pin (11).

3. Filter device according to claim 1, **characterised by** separate exit openings such as grooves, passages, backing-up¹ spaces, bypass ducts.

4. Filter device according to claims 1 and 2, **characterised by** a main discharge passage (16) in the pin (11) which opens to atmosphere at one end and to which are connected two part discharge passages (14, 15) which can be bought into flowable connection with one or other part inlet passage (8a, 8b) when the pin (11) is displaced.

5. Filter device according to any of the foregoing claims, **characterised in that** when the part discharge passage (14, 15) is in flowable connection with the associated part inlet passages (8a, 8b), the flow cross-section in the transitional region between the part inlet passages (8a, 8b) and the part discharge passages is smaller than the flow cross-section of the part inlet passages (8a, 8b).

6. Filter device according to any of the foregoing claims, **characterised in that** the blocking means (10) is arranged in a housing (17) of its own which can be connected to the housing (1) of the filter device.

7. Filter device according to claim 6, **characterised in that** the housing (17) is heatable.

8. Filter device according to claim 1, **characterised in that** the pin (11) is formed to be circular in section and the constriction (12) is provided around the entire circumference of the pin (11).

9. Filter device according to claim 1, **characterised in that**, on its side adjacent the main inlet passage (6), the pin (11) has a bypass passage (27) which, as a function of the position of the pin (11), is able to make a connection between the main inlet passage (6) and the outside atmosphere.

10. Filter device according to claim 9, **characterised in that** the opening of the bypass passage (27) into the main inlet passage (6) is so arranged that the main inlet passage (6) can be put into flowable connection both with the constriction (12) and with the bypass (27) but, by adjusting the pin (11), the connection between the main inlet passage (6) and the constriction (12) can be shut off while the connection between the main inlet passage (6) and the bypass passage (27) is open.

11. Filter device according to claim 1, **characterised in that**, in addition to its movement along its longitudinal axis, the pin (11) of the blocking means (10) can also be rotated about its longitudinal axis.

12. Filter device according to any of the foregoing claims, **characterised in that** blocking means (10a) are arranged on both sides of the housing (1), at the inlet opening and downstream of the outlet opening.

## Revendications

1. Filtre pour extrudeuses et presses d'injection destinées au traitement des matériaux thermoplastiques, comprenant des éléments filtrants (4, 5), montés de manière amovible dans les porte-filtre (2, 3), et disposés dans au moins deux canaux secondaires séparés, agencés dans un boîtier (1) entre au moins un canal d'admission principal (6) et au moins un canal de sortie principal (7), lesquels éléments filtrants peuvent être introduits et retirés avec les porte-filtre (2, 3) disposés chacun dans une forure du boîtier, la zone du canal d'admission principal (6) étant munie en amont des porte-filtre (2, 3) d'au moins un organe d'obturation (10) qui, dans la position de passage, ne gêne pas l'écoulement de la matière plastique du canal d'admission principal (6) vers les deux éléments filtrants (4, 5), mais, dans la position d'obturation, ferme le passage du flux de matière plastique entre l'un des canaux d'admission secondaires (8a ou 8b) et le canal d'admission principal (6) et relie le côté pollué (S) de l'élément filtrant (4 ou 5) associé à ce canal d'admission secondaire (8a ou 8b) avec le côté extérieur du boîtier par l'intermédiaire de canaux de sortie, **caractérisé en ce que**
a) l'organe d'obturation (10) est formé par une goupille (11) réglable qui passe à travers le canal d'admission principal (6) transversalement au sens d'écoulement de la matière plastique à filtrer,
b) la voie d'écoulement du canal d'admission principal (6) vers les canaux d'admission secondaires (8a et 8b) est formée par un rétrécissement (12) du contour extérieur de la goupille (11).

2. Filtre selon la revendication 1, **caractérisé en ce que** les canaux de sortie sont agencés dans la goupille (11).

3. Filtre selon la revendication 1, **caractérisé par** des orifices de sortie séparés, tels que des cannelures, des canaux, des espaces de retenue ou des conduites de dérivation.

4. Filtre selon les revendications 1 et 2, **caractérisé par** un canal de sortie principal (16) dans la goupille (11), dont une extrémité débouche dans l'atmosphère et auquel sont raccordés deux canaux de sortie secondaires (14, 15) qui, par un déplacement de la goupille (11), peuvent être reliés à l'un ou l'autre canal d'admission secondaire (8a, 8b).

5. Filtre selon l'une quelconque des revendications précédentes, **caractérisé en ce que**, lorsque le canal de sortie secondaire (14, 15) est relié aux canaux d'admission secondaires (8a, 8b) correspondants, la section de passage dans la zone de transition entre les canaux d'admission secondaires (8a, 8b) et les canaux de sortie secondaires (14, 15) est inférieure à la section de passage des canaux d'admission secondaires (8a, 8b).

6. Filtre selon l'une quelconque des revendications précédentes, **caractérisé en ce que** l'organe d'obturation (10) est disposé dans un boîtier (17) qui lui est réservé, lequel peut être assemblé contre le boîtier (1) du filtre.

7. Filtre selon la revendication 6, **caractérisé en ce que** le boîtier (17) peut être chauffé.

8. Filtre selon la revendication 1, **caractérisé en ce que** la goupille (11) présente sur une coupe une farme ronde et le rétrécissement (12) est prévu sur tout le pourtour de la goupille (11).

9. Filtre selon la revendication 1, **caractérisé en ce que** le côté de la goupille (11) orienté vers le canal d'admission principal (6) comporte une conduite de dérivation (27) qui, en fonction de la position de la goupille (11), est en mesure d'établir une liaison entre le canal d'admission principal (6) et l'environnement extérieur.

10. Filtre selon la revendication 9, **caractérisé en ce que** l'embouchure de la conduite de dérivation (27) dans le canal d'admission principal (6) est disposée de telle sorte que le canal d'admission principal (6) puisse être relié à la fois avec le rétrécissement (12) et avec la conduite de dérivation (27), mais un déplacement de la goupille (11) permet d'obturer la liaison entre le canal d'admission principal (6) et le rétrécissement (12), alors que la liaison entre le canal d'admission principal (6) et la conduite de dérivation (27) est ouverte.

11. Filtre selon la revendication 1, **caractérisé en ce que** la goupille (11) de l'organe d'obturation (10) peut, en plus de son mouvement dans le sens de l'axe longitudinal, effectuer aussi un mouvement de rotation autour de l'axe longitudinal.

12. Filtre selon l'une quelconque des revendications précédentes, **caractérisé en ce que** des organes d'obturation (10a) sont disposés de part et d'autre du boîtier (1), au niveau de l'orifice d'admission et en aval de l'orifice de sortie.
